# EUROPÄISCHE PATENTSCHRIFT

(11) **EP 2 910 427 B1**
(45) Veröffentlichungstag und Bekanntmachung des Hinweises auf die Patenterteilung: **02.11.2016**
(21) Anmeldenummer: 15152114.3
(22) Anmeldetag: 22.01.2015
(51) Int. Cl.: B60R 3/02, A61G 3/06, B60P 1/43

(54) **Schiebetrittanordnung**
Retractable step assembly
Agencement de marche coulissante

(30) Priorität: 20.02.2014 DE 102014203049
(43) Veröffentlichungstag der Anmeldung: 26.08.2015
(73) Patentinhaber: ROBERT BOSCH GMBH, 70442 Stuttgart (DE)
(72) Erfinder: Hoepfner, Rene, 71640 Ludwigsburg (DE); Munz, Michael, 72760 Reutlingen (DE)

(56) Entgegenhaltungen:
- EP-A2- 1 787 612
- EP-B1- 2 033 870
- WO-A1-2014/107756
- JP-A- 2005 007 907
- US-A- 5 632 593
- US-A1- 2010 269 273

## Beschreibung

Die Erfindung betrifft eine Schiebetrittanordnung für ein Fahrzeug, die einen magnetischen Kraftsensor umfasst.

### Stand der Technik

Ein Schienenfahrzeug weist in der Regel mehrere Schiebetüren auf, durch die Fahrgäste ein- und aussteigen können. Um ein Ein- und Aussteigen an einem Bahnsteig zu erleichtern, kann die Schiebetür eine sogenannte Schiebetrittanordnung aufweisen, die wiederum eine Trittplatte aufweist, die bei geöffneter Schiebetür in Richtung des Bahnsteigs hinausfährt und somit eine Lücke zwischen dem Schienenfahrzeug und dem Bahnsteig schließt.

Eine Zustiegs- und/oder Zufahrtshilfe für Fahrzeuge zur Personenbeförderung ist aus der Druckschrift EP 1 787 612 A2 bekannt. Diese Zustiegs- und/oder Zufahrtshilfe umfasst eine Rahmen, eine mit dem Rahmen beweglich gelagerte Trittplatte, einen Antrieb für die Trittplatte und mindestens einen Dehnungsmessstreifen zur Erfassung von vertikalen und/oder horizontalen, an der Trittplatte angreifenden Störkräften. Der mindestens eine Dehnungsmessstreifen ist an einem stationären, jedoch beim Auftreten der Störkräfte ausreichend verbiegbaren Teil des Rahmens und/oder des Antriebs angebracht.

Ein Schiebetritt für Schienenfahrzeuge ist in der Druckschrift EP 2 033 870 B1 beschrieben. Hierbei ist unterhalb eines Bodens des Schienenfahrzeugs in einem Türbereich eine Trittplatte mittels zweier Auflagesockel gehalten und mit Führungen horizontal und senkrecht zur Fahrtrichtung des Schienenfahrzeugs verschiebbar. Dabei ist an mindestens einem Auflagesockel der Trittplatte oder einer Führung eine Messkammer vorhanden oder daran befestigt, wobei an der Messkammer zum Messen von Scherkräften Sensoren angeordnet sind. Außerdem ist an der Messkammer ein vertikal ausgerichtetes Stegelement vorhanden oder dort ausgebildet, an dem die Sensoren angeordnet sind.

### Offenbarung der Erfindung

Vor diesem Hintergrund wird eine Schiebetrittanordnung mit den Merkmalen von Patentanspruch 1 vorgestellt. Weitere Ausgestaltungen der erfindungsgemäßen Schiebetrittanordnung ergeben sich aus den abhängigen Patentansprüchen und der Beschreibung.

Die vorgestellte Schiebetrittanordnung mit dem magnetischen Kraftsensor kann üblicherweise für ein Schienenfahrzeug verwendet werden und zur Überbrückung eines Abstands bzw. einer Lücke zwischen dem Schienenfahrzeug und einer Bahnsteigkante im Bereich einer Tür, bspw. einer Schiebetür oder einer Schwenktür, des Schienenfahrzeugs angeordnet sein. Mit dieser Schiebetrittanordnung kann ein sicheres Ein- und Aussteigen von Fahrgästen gewährleistet werden. Dabei weist ein Boden eines Durchgangs der Tür die Schiebetrittanordnung auf.

Dabei kann die Schiebetrittanordnung eine Sicherheitsschaltmatte umfassen, die einen begehbaren Bereich der Schiebetrittanordnung am Boden des Durchgangs der Tür bildet und unter anderem den magnetischen Kraftsensor aufweist. Über den magnetischen Kraftsensor ist über einen elektrisch geschlossenen Kontakt einem Kontrollgerät anzuzeigen, ob eine ausgefahrene Trittplatte der Schiebetrittanordnung durch einen Fahrgast belegt ist oder nicht. Über dieses Kontrollgerät sind die Schiebetrittanordnung und die Tür des Schienenfahrzeugs zu kontrollieren und somit anzusteuern, wodurch die Trittplatte automatisch zu verschieben und/oder die Tür automatisch zu öffnen und zu schließen ist.

Der magnetische Kraftsensor ist dazu ausgebildet, zu ermitteln, ob und mit welcher Kraft die Trittplatte der Schiebetrittanordnung belastet wird. Ein hierbei ermittelter Wert wird über ein Signal an das Kontrollgerät weitergeleitet. So ist es möglich, ein Einfahren der Trittplatte zu verhindern, wenn durch den magnetischen Kraftsensor erkannt wird, dass die Trittplatte durch die Kraft beaufschlagt und demnach belegt ist.

Außerdem weist der magnetische Kraftsensor für die Schiebetrittanordnung gegenüber ansonsten verwendeten Sensoren, die als Dehnungsmessstreifen ausgebildet sind, eine höhere Dauer-Genauigkeit auf. Ferner ist der magnetische Kraftsensor auch in einem großen Betriebstemperaturbereich verwendbar. Eine Diagnose einer Veränderung eines Zustands der Trittplatte und somit der Schiebetrittanordnung, der aus einer Kraft resultiert, die auf die Trittplatte wirkt, kann bspw. durch eine Frequenzanalyse durchgeführt werden.

Bei einer Bewegung, üblicherweise bei einem Ein- und Ausfahren, der Trittplatte können durch weitere Komponenten der Schiebetrittanordnung, d. h. durch mindestens ein Lager, mindestens eine Führungseinrichtung, mindestens einen Motor oder mindestens ein Haltemodul, mit dem der Kraftsensor mit der Schiebetrittanordnung verbunden ist, mechanische Schwingungen erzeugt werden, die von dem Kraftsensor ebenfalls zu erfassen sind. Frequenzen und Amplituden, in der Regel dominante Amplituden, dieser Schwingungen können von einem Kontrollgerät, das zum Kontrollieren der Schiebetrittanordnung und dem Kraftsensor ausgebildet ist, berechnet werden. Dabei berechnete Daten und/oder Werte zu den Amplituden und Frequenzen der Schwingungen werden zur Analyse einer Funktion von mindestens einer Komponente der Schiebetrittanordnung, bspw. als Maß für einen Verschleiß von der mindestens einen Komponente und/oder zur Diagnose der mindestens einen Komponente der Schiebetrittanordnung, verwendet. Dies betrifft u. a. eine Bewegungsmechanik der Schiebetrittanordnung, wobei diese Bewegungsmechanik zumindest den mindestens einen Motor und die mindestens eine Führungseinrichtung umfasst. Je nach Ausgestaltung der Schiebetrittanordnung kann die Bewegungsmechanik das mindestens eine Lager und neben dem mindestens einen Motor als weitere mechanische Antriebe Riemen, Zahnräder oder Riemenantriebe umfassen. Dabei werden die Werte zu den Amplituden und Frequenzen der Schwingungen durch eine Filterung und eine Frequenzanalyse berechnet und mit Grenzwerten verglichen.

Außerdem ist innerhalb des Kraftsensors ein mechanischer Anschlag vorgesehen, mit dem eine auf den Kraftsensor wirkende Kraft abzuleiten ist, wenn diese einen Grenzwert überschreitet, wodurch der Kraftsensor vor einer möglichen Zerstörung durch die auf ihn wirkende Kraft zu schützen ist.

Weitere Vorteile und Ausgestaltungen der Erfindung ergeben sich aus der Beschreibung und den beiliegenden Zeichnungen.

Es versteht sich, dass die voranstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

### Kurze Beschreibung der Zeichnungen

Figur 1 zeigt in schematischer Darstellung eine erste Ausführungsform einer erfindungsgemäßen Schiebetrittanordnung, die einen magnetischen Kraftsensor umfasst.
Figur 2 zeigt in schematischer Darstellung ein Detail aus Figur 1.
Figur 3 zeigt in schematischer Darstellung eine zweite Ausführungsform einer erfindungsgemäßen Schiebetrittanordnung.

### Ausführungsformen der Erfindung

Ausführungsformen der Erfindung sind in den Figuren schematisch dargestellt und werden nachfolgend unter Bezugnahme auf die Figuren ausführlich beschrieben.

Die Figuren werden zusammenhängend und übergreifend beschrieben, gleiche Bezugszeichen bezeichnen gleiche Komponenten.

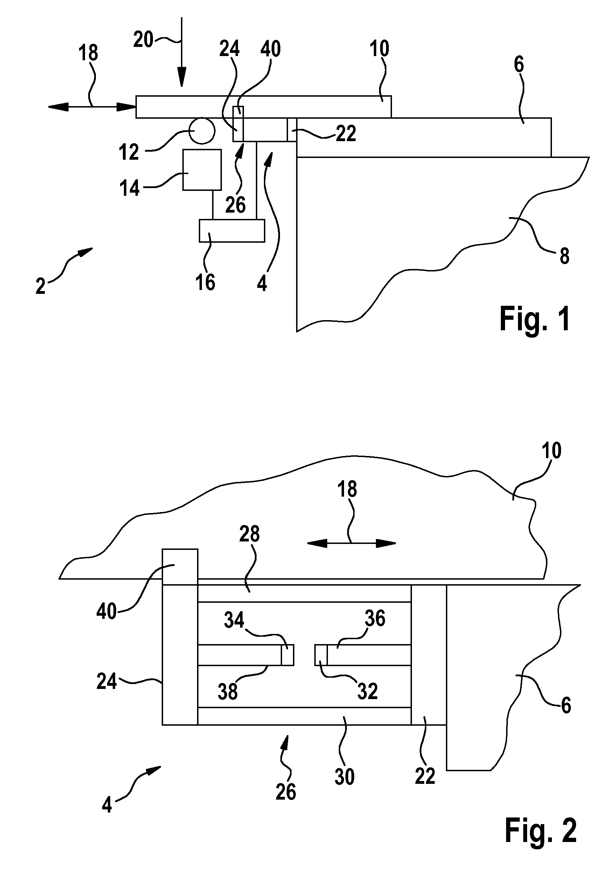

Figur 1 zeigt in schematischer Darstellung die erste Ausführungsform der erfindungsgemäßen Schiebetrittanordnung 2, die eine Ausführungsform eines magnetischen Kraftsensors 4 umfasst, wobei dieser magnetische Kraftsensor 4 in Figur 2, die einen Ausschnitt von Figur 1 darstellt, detailliert dargestellt ist.

Die Schiebetrittanordnung 2 umfasst einen Tragekörper 6, der an einem Aufbau 8 eines hier als Schienenfahrzeug ausgebildeten Fahrzeugs befestigt ist. Außerdem umfasst die Schiebetrittanordnung 2 eine Trittplatte 10, eine Führungseinrichtung 12 für die Trittplatte 10, die hier mindestens eine Rolle umfasst, einen Motor 14 sowie ein Kontrollgerät 16, mit dem ein Betrieb der Schiebetrittanordnung 2 zu kontrollieren ist, wobei dieses Kontrollgerät 16 hier mit dem Motor 14 und dem magnetischen Kraftsensor 4 zum Austausch von Signalen verbunden ist.

Bei Betrieb der Schiebetrittanordnung 2 ist der Motor 14 von dem Kontrollgerät 16 anzusteuern, wodurch die Führungseinrichtung 12 wiederum durch den Motor 14 zu beaufschlagen ist. Somit ist es möglich, die Trittplatte 10 ausgehend von den Kontrollgerät 16 und dem Motor 14 hier über die Führungseinrichtung 12, wie durch einen Doppelpfeil 18 angedeutet, relativ zu dem Tragekörper 6 hin und her zu bewegen. Die Schiebetrittanordnung 2 ist hier in einem unteren Bereich bzw. einem Bodenbereich eines Durchgangs einer Tür des Schienenfahrzeugs angeordnet.

Wenn die Tür des Schienenfahrzeugs geschlossen ist, ist vorgesehen, dass die Trittplatte 10 in eine Geschlossen-Stellung zu verfahren ist. Sofern die Tür nach Erreichen eines Bahnsteigs zu öffnen ist, ist vorgesehen, die Trittplatte 10 in eine Geöffnet-Stellung auszufahren und dabei eine Lücke zwischen einer Bahnsteigkante und dem Schienenfahrzeug zu schließen. Wenn sich die Trittplatte 10 in der Geöffnet-Stellung befindet, können Fahrgäste sicher ein- und aussteigen und dabei auch die in der Geöffnet-Stellung befindliche Trittplatte 10 betreten. Ein auf der Trittplatte 10 befindlicher Fahrgast bewirkt eine Kraft, die in Figur 1 durch einen Pfeil 20 angedeutet ist. Ob auf die Trittplatte 10 eine Kraft wirkt und welchen Wert diese Kraft aufweist, ist durch den magnetischen Kraftsensor 4 zu bestimmen.

Wie insbesondere Figur 2 zeigt, weist der magnetische Kraftsensor 4 ein erstes Kontaktelement 22, ein zweites Kontaktelement 24 und ein Messelement 26 auf. Das Messelement 26 umfasst zwei zueinander parallel angeordnete Biegebalken 28, 30, die beide jeweils mit dem ersten und dem zweiten Kontaktelement 22, 24 verbunden sind. Zwischen den beiden Biegebalken 28, 30 umfasst das Messelement 26 ein erstes Magnetelement 32 sowie ein zweites Magnetelement 34. Dabei ist das erste Magnetelement 32 über ein Stützelement 36 mit dem ersten Kontaktelement 22 und das zweite Magnetelement 34 über ein Stützelement 38 mit dem zweiten Kontaktelement 24 verbunden. Weiterhin ist vorgesehen, dass eines der beiden Magnetelemente 32, 34 als Permanentmagnet und das andere Magnetelement 34, 32 als Hallsonde ausgebildet ist, wobei es unerheblich ist, welches der beiden Magnetelemente 32, 24 nun der Permanentmagnet und welches die Hallsonde ist. Die Hallsonde ist dazu ausgebildet, ein von den Permanentmagneten erzeugtes Magnetfeld positionsabhängig zu erfassen.

Weiterhin ist vorgesehen, dass das Messelement 26 und somit der magnetische Kraftsensor 4 hier über das erste Kontaktelement 22 an dem Tragekörper 6 der Schiebetrittanordnung 2 befestigt ist. Somit ergibt sich, dass sich die Trittplatte 10 bei einer Bewegung relativ zu dem Tragekörper 6 auch relativ zu dem daran befestigten magnetischen Kraftsensor 4 bewegt. Die Messzelle 26 und somit der magnetische Kraftsensor 4 ist weiterhin über das zweite Kontaktelement 24 und ein Verbindungselement 40 mit der verschiebbaren Trittplatte 10 beweglich verbunden. Über dieses Verbindungselement 40 wird die auf die Trittplatte 10 wirkende Kraft (Pfeil 20) unabhängig von einer Position, die die Trittplatte 10 relativ zu dem Tragekörper 6 sowie dem magnetischen Kraftsensor 4 einnimmt, auf das zweite Kontaktelement 24 und somit auf den Kraftsensor 4 übertragen.

Dabei ist die auf die Trittplatte 10 wirkende Kraft üblicherweise senkrecht zu einer Längsrichtung der beiden Biegebalken 28, 30 orientiert. Sofern die Kraft über das Verbindungselement 40 auf das zweite Kontaktelement 24 wirkt, werden die beiden Biegebalken 28, 30 hier nach unten gebogen. Daraus resultiert wiederum, dass eine Position der beiden Magnetelemente 32, 24 relativ zueinander verändert wird, wodurch auch eine Position der Hallsonde positionsabhängig innerhalb des Magnetfelds des Permanentmagneten verändert wird. Bei Vorliegen einer derartigen Veränderung des von der Hallsonde erfassten Magnetfelds des Permanentmagneten ist eine Belastung des magnetischen Kraftsensors 4 aufgrund der Kraft, die auf die Trittplatte 10 wirkt, nachzuweisen.

In diesem Fall wird von dem magnetischen Kraftsensor 4 ein Signal erzeugt, das darauf hinweist, dass auf die Trittplatte 10 eine Kraft wirkt. Dieses Signal wird an das Kontrollgerät 16 weitergeleitet. Falls die Trittplatte 10 nicht vollständig ausgefahren sein sollte und/oder in Richtung der Geschlossen-Stellung bewegt wird, wobei die Trittplatte 10 nicht die Geöffnet-Stellung einnimmt, und falls zudem über den magnetischen Kraftsensor 4 festzustellen ist, dass auf die Trittplatte 10 die Kraft wirkt, wird der Motor 14 von dem Kontrollgerät 16 angesteuert, wobei die Trittplatte 10 von dem Motor 14 über die Führungseinrichtung 12 in die Geöffnet-Stellung zu bewegen und/oder zu versetzen ist.

Der magnetischer Kraftsensor 4 umfasst das Messeelement 26 und die beiden Kontaktelemente 22, 24 wobei der magnetische Kraftsensor über das erste Kontaktelement 22 an dem Tragekörper 6 der Schiebetrittanordnung 2 zu befestigen und über das zweite Kontaktelement 24 mit der Trittplatte 10 der Schiebetrittanordnung 2 zu verbinden ist. Das Messelement 26 ist mit den beiden Kontaktelementen 22, 24 verbunden und bei Auftreten der auf die Trittplatte 10 wirkenden Kraft zu verformen.

Das erste Kontaktelement 22 des magnetischen Kraftsensors 4 ist an dem Tragekörper 6 befestigt, wohingegen das zweite Kontaktelement 24 hier über das Verbindungselement 40 mit der Trittplatte 10 beweglich, üblicherweise gleitend, verbunden ist. Dabei ist die Trittplatte 10 relativ zu dem magnetischen Kraftsensor 4 zu verschieben.

Insgesamt weist die hier vorgestellte Ausführungsform der Schiebetrittanordnung 2 für ein Fahrzeug den an dem Fahrzeug befestigten Tragekörper 6, die Trittplatte 10 und den magnetischen Kraftsensor 4 auf, wobei die Trittplatte 10 relativ zu dem Tragekörper 10 verschiebbar ist. Der magnetische Kraftsensor 4 ist einerseits an dem Tragekörper 6 befestigt und andererseits mit der verschiebbaren Trittplatte 10 beweglich verbunden, wobei der magnetische Kraftsensor 4 dazu ausgebildet ist, eine Kraft, die auf die Trittplatte 10 wirkt, zu messen.

Das Kontrollgerät 16 ist dazu ausgebildet, den Motor 14 anzusteuern, wobei der Motor 14 dazu ausgebildet ist, die Trittplatte 10 relativ zu dem Tragekörper 6 zu verschieben und/oder bewegen.

Falls die Kraft auf die Trittplatte 10 wirkt, ist der magnetische Kraftsensor 4 dazu ausgebildet, das Signal zu erzeugen und an das Kontrollgerät 16 zu übermitteln, wobei das Kontrollgerät 16 in diesem Fall dazu ausgebildet ist, die Trittplatte 10 durch Ansteuern des Motors 14 in eine herausgefahrene Stellung, bspw. die Geöffnet-Stellung, zu versetzen.

Das Messelement 26 weist die zwei zueinander parallel angeordneten Biegebalken 28, 30 und als Magnetelemente 32, 34 den Permanentmagneten sowie die Hallsonde auf. Dabei ist jeder Biegebalken 38, 30 einerseits mit dem ersten Kontaktelement 22, 24 und andererseits mit dem zweiten Kontaktelement 22, 24 verbunden. Das erste Magnetelement 32 ist mit dem ersten Kontaktelement 22 und das zweite Magnetelement 24 mit dem zweiten Kontaktelement 24 verbunden. Die Magnetelemente 32, 34 sind bei Auftreten der auf die Trittplatte 10 wirkenden Kraft relativ zueinander zu bewegen, wobei von der Hallsonde eine räumliche Änderung eines Magnetfelds des Permanentmagneten zu erfassen und diesbezüglich ein Signal, das das Kontrollgerät 16 darüber informiert, dass die Trittplatte 10 belegt ist, zu erzeugen ist.

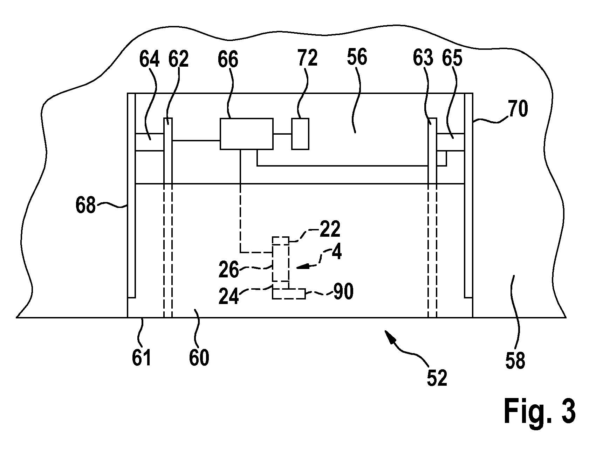

Die in Figur 3 in Draufsicht dargestellte zweite Ausführungsform der Schiebetrittanordnung 52 umfasst ebenfalls den bereits anhand der Figuren 1 und 2 vorgestellten magnetischen Kraftsensor 4. Außerdem umfasst diese Schiebetrittanordnung 52 einen Tragekörper 56, der zugleich eine Unterverkleidung der Schiebetrittanordnung 52 bildet. Dieser Tragekörper 56 ist hier zugleich als Verkleidung und/oder als Gehäuseabschnitt eines Gehäuses der Schiebetrittanordnung 52 ausgebildet, wobei innerhalb eines derartigen Gehäuses neben dem magnetischen Kraftsensor 4 auch weitere nachfolgend beschriebene Komponenten der Schiebetrittanordnung 52 angeordnet sind. Hier ist vorgesehen, dass der Tragekörper 56 an einem Aufbau 58 im Bereich einer Tür eines Fahrzeugs befestigt ist. Demnach ist auch die Schiebetrittanordnung 52 mit dem Aufbau 58 befestigt und zudem zumindest teilweise innerhalb dieses Aufbaus 58 angeordnet.

Als weitere Komponenten umfasst die Schiebetrittanordnung 52 eine Trittplatte 60, die hier durch eine Schwelle 61 begrenzt ist, eine erste als Führungsschiene ausgebildete Führungseinrichtung 62, eine zweite, ebenfalls als Führungsschiene ausgebildete Führungseinrichtung 63, einen ersten Motor 64, der der ersten Führungseinrichtung 62 zugeordnet ist, ein zweiten Motor 65, der hier der zweiten Führungseinrichtung 63 zugeordnet ist und ein Kontrollgerät 66, mit dem ein Betrieb der Schiebetrittanordnung 52 zu kontrollieren ist. Bei dem Betrieb ist die Trittplatte 60, durch die Motoren 64, 65 angetrieben, entlang der Führungseinrichtungen 62, 63 zwischen einer Geschlossen-Stellung, bei der die Trittplatte 60 komplett eingefahren ist, und einer Geöffnet-Stellung, bei der die Trittplatte 60 komplett ausgefahren ist, relativ zu dem Aufbau 58 hin und her zu bewegen und somit zu verschieben.

Ferner umfasst das Gehäuse der Schiebetrittanordnung 52 einen ersten Rahmen 68 und einen zweiten Rahmen 70. Das Kontrollgerät 66 ist hier mit dem magnetische Kraftsensor 4 und den beiden Motoren 64, 65 verbunden. Außerdem ist das Kontrollgerät 66 hier mit einem Funktionsmodul 72 verbunden, das hier eine Verriegelung für die Trittplatte 60 sowie einen Positionssensor aufweist, mit dem eine jeweils aktuelle Stellung der Trittplatte 60 zu bestimmen ist. Dabei ist es möglich mit diesem Positionssensor herauszufinden, ob sich die Trittplatte 60 in der Geschlossen-Stellung, in der Geöffnet-Stellung oder in einer Stellung zwischen der Geschlossen-Stellung und der Geöffnet-Stellung befindet.

In der Darstellung aus Figur 3 sind die beiden Führungseinrichtungen 62, 63 jeweils teilweise und der magnetische Kraftsensor 4 sowie ein Verbindungselement 90 vollständig unterhalb der Trittplatte 60 angeordnet.

Ein erstes Kontaktelement 22 des magnetischen Kraftsensors 4 ist an dem Tragekörper 56 der Schiebetrittanordnung 52 befestigt und somit auch indirekt mit dem Aufbau 58 des Fahrzeugs verbunden. Ein zweites Kontaktelement 24 des magnetischen Kraftsensors 4 und das Verbindungselement 90 sind hier aneinander befestigt. Das Verbindungselement 90 ist wiederum mit der verschiebbaren Trittplatte 60 gleitend und somit beweglich verbunden, wobei das zweite Kontaktelement 24 mit der Trittplatte 60 indirekt gleitend und somit beweglich verbunden ist. Ein Messelement 26 des magnetischen Kraftsensors 4 ist hierbei zwischen den beiden Kontaktelementen 22, 24 angeordnet. Auch hier ist an jedem der beiden Kontaktelemente 22, 24 jeweils ein nicht weiter dargestelltes Magnetelement befestigt, wobei eines der beiden Magnetelemente einen Permanentmagneten und das andere der beiden Magnetelemente eine Hallsonde umfasst.

Falls die Trittplatte 60 keinerlei Belastung unterworfen ist, nehmen die beiden Kontaktelemente 22, 24 und somit auch die Magnetelemente relativ zueinander eine sogenannte Entlastungsposition ein, die auch als Nullposition bezeichnet werden kann. Dabei befindet sich das Messelement 26 in einem Entlastungszustand.

Eine Position des ersten Kontaktelements 22 des magnetischen Kraftsensors 4 relativ zu dem Tragekörper 56 ist in jeder Stellung der Trittplatte 60 gleich, unabhängig davon, ob für das Messelement 26 der Entlastungszustand vorliegt, oder ob die Trittplatte 60 durch eine darauf wirkende Masse beaufschlagt und somit belastet wird, wobei sich das Messelement 26 in einem Belastungszustand befindet. Eine auf die Trittplatte 60 wirkende Kraft, wird über das Verbindungselement 90, zu dem zweiten Kontaktelement 24 übertragen, wodurch sich eine Position des zweiten Kontaktelements 22 relativ zu dem ersten Kontaktelement 22 ändert, wodurch wiederum die Messzelle 26 deformiert wird.

Wie bereits anhand der Figuren 1 und 2 dargelegt, wird durch Belasten der Trittplatte 60 ein Magnetfeld eines Permanentmagneten als eines der beiden Magnetelemente des Kraftsensors 4 relativ zu einer Hallsonde als anderes der beiden Magnetelemente des magnetischen Kraftsensors 4 verändert, wodurch wiederum eine auf die Trittplatte 60 wirkende Kraft nachzuweisen ist.

## Patentansprüche

1. Schiebetrittanordnung für ein Fahrzeug, die einen an dem Fahrzeug befestigten Tragekörper (6, 56), eine Trittplatte (10, 60) und einen magnetischen Kraftsensor (4) aufweist, wobei die Trittplatte (10, 60) relativ zu dem Tragekörper (6, 56) verschiebbar ist, wobei der magnetische Kraftsensor (4) einerseits an dem Tragekörper (6, 56) befestigt und andererseits mit der verschiebbaren Trittplatte (10, 60) verbunden ist, wobei der magnetische Kraftsensor (4) dazu ausgebildet ist, eine Kraft, die auf die Trittplatte (10, 60) wirkt, zu messen.

2. Schiebetrittanordnung nach Anspruch 1, bei der ein erstes Kontaktelement (22) des magnetischen Kraftsensors (4) an dem Tragekörper (6, 56) befestigt und ein zweites Kontaktelement (24) des magnetischen Kraftsensors (4) mit der Trittplatte (10, 60) beweglich verbunden ist, wobei die Trittplatte (10, 60) relativ zu dem magnetischen Kraftsensor (4) zu verschieben ist.

3. Schiebetrittanordnung nach Anspruch 1 oder 2, die ein Kontrollgerät (16, 66) und mindestens einen Motor (14, 64, 65) aufweist, wobei das Kontrollgerät (16, 66) dazu ausgebildet ist, den mindestens einen Motor (14, 64, 65) anzusteuern, wobei der mindestens eine Motor (14, 64, 65) dazu ausgebildet ist, die Trittplatte (10, 60) relativ zu dem Tragekörper (6, 56) zu bewegen.

4. Schiebetrittanordnung nach Anspruch 3, bei der der magnetische Kraftsensor (4) dazu ausgebildet ist, für den Fall, dass die Kraft auf die Trittplatte (10, 60) wirkt, ein Signal zu erzeugen und an das Kontrollgerät (16, 66) zu übermitteln, wobei das Kontrollgerät (16, 66) in diesem Fall dazu ausgebildet ist, die Trittplatte (10, 60) durch Ansteuern des mindestens einen Motors (14, 64, 65) in eine herausgefahrene Stellung zu versetzen.

5. Schiebetrittanordnung nach einem der voranstehenden Ansprüche, die in einem Bereich einer Tür eines Schienenfahrzeugs anzuordnen ist.

6. Schiebetrittanordnung nach einem der voranstehenden Ansprüche, bei der der magnetische Kraftsensor (4) ein Messeelement (26) und zwei Kontaktelemente (22, 24) aufweist, wobei der magnetische Kraftsensor (4) über ein erstes Kontaktelement (22) an dem Tragekörper (6, 56) der Schiebetrittanordnung (2, 52) befestigt und über ein zweites Kontaktelement (24) mit der Trittplatte (10, 60) der Schiebetrittanordnung (2, 52) verbunden ist, wobei das Messelement (26) mit den beiden Kontaktelementen (22, 24) verbunden und bei Auftreten der auf die Trittplatte (10, 60) wirkenden Kraft zu verformen ist.

7. Schiebetrittanordnung nach Anspruch 6, bei der das Messelement (26) des magnetischen Kraftsensors (4) zwei zueinander parallel angeordnete Biegebalken (28, 30) und als Magnetelemente (32, 34) einen Permanentmagneten und eine Hallsonde aufweist, wobei jeder Biegebalken (28, 30) einerseits mit dem ersten Kontaktelement (22) und andererseits mit dem zweiten Kontaktelement (24) verbunden ist, wobei ein erstes Magnetelement (32) mit dem ersten Kontaktelement (22) und ein zweites Magnetelement (24) mit dem zweiten Kontaktelement (24) verbunden ist, wobei die Magnetelemente (32, 34) bei Auftreten der auf die Trittplatte (10, 60) wirkenden Kraft relativ zueinander zu bewegen sind, wobei von der Hallsonde eine räumliche Änderung eines Magnetfelds des Permanentmagneten zu erfassen ist.

## Claims

1. Retractable step arrangement for a vehicle, which retractable step arrangement has a supporting body (6, 56) which is fastened to the vehicle, a step plate (10, 60) and a magnetic force sensor (4), wherein the step plate (10, 60) can be displaced relative to the supporting body (6, 56), wherein the magnetic force sensor (4) is firstly fastened to the support body (6, 56) and is secondly connected to the displaceable step plate (10, 60), wherein the magnetic force sensor (4) is designed to measure a force which acts on the step plate (10, 60).

2. Retractable step arrangement according to Claim 1, in which a first contact element (22) of the magnetic force sensor (4) is fastened to the supporting body (6, 56) and a second contact element (24) of the magnetic force sensor (4) is movably connected to the step plate (10, 60), wherein the step plate (10, 60) can be displaced relative to the magnetic force sensor (4).

3. Retractable step arrangement according to Claim 1 or 2, which has a control device (16, 66) and at least one motor (14, 64, 65), wherein the control device (16, 66) is designed to drive the at least one motor (14, 64, 65), wherein the at least one motor (14, 64, 65) is designed to move the step plate (10, 60) relative to the supporting body (6, 56).

4. Retractable step arrangement according to Claim 3, in which the magnetic force sensor (4) is designed to generate a signal and transmit the said signal to the control device (16, 66) if the force acts on the step plate (10, 60), wherein the control device (16, 66) is in this case designed to shift the step plate (10, 60) into an extended position by driving the at least one motor (14, 64, 65).

5. Retractable step arrangement according to one of the preceding claims, which is intended to be arranged in a region of a door of a rail vehicle.

6. Retractable step arrangement according to one of the preceding claims, in which the magnetic force sensor (4) has a measuring element (26) and two contact elements (22, 24), wherein the magnetic force sensor (4) is fastened to the supporting body (6, 56) of the retractable step arrangement (2, 52) by means of a first contact element (22) and is connected to the step plate (10, 60) of the retractable step arrangement (2, 52) by means of a second contact element (24), wherein the measuring element (26) is connected to the two contact elements (22, 24) and can be deformed when the force which acts on the step plate (10, 60) takes effect.

7. Retractable step arrangement according to Claim 6, in which the measuring element (26) of the magnetic force sensor (4) has two bending bars (28, 30), which are arranged parallel in relation to one another, and, as magnet elements (32, 34), a permanent magnet and a Hall probe, wherein each bending bar (28, 30) is connected to the first contact element (22) at one end and to the second contact element (24) at the other end, wherein a first magnet element (32) is connected to the first contact element (22) and a second magnet element (24) is connected to the second contact element (24), wherein the magnet elements (32, 34) can move relative to one another when the force which acts on the step plate (10, 60) takes effect, wherein a spatial change in a magnetic field of the permanent magnet can be detected by the Hall probe.

## Revendications

1. Agencement de marche coulissante destiné à un véhicule, qui comporte un corps de support (6, 56) fixé au véhicule, un marchepied (10, 60) et un capteur de force magnétique (4), dans lequel le marchepied (10, 60) est coulissant par rapport au corps de support (6, 56), dans lequel le capteur de force magnétique (4) est d'une part fixé au corps de support (6, 56) et est d'autre part relié au marchepied coulissant (10, 60), dans lequel le capteur de force magnétique (4) est conçu pour mesurer une force qui agit sur le marchepied (10, 60).

2. Agencement de marche coulissante selon la revendication 1, dans lequel un premier élément de contact (22) du capteur de force magnétique (4) est fixé au corps de support (6, 56) et un second élément de contact (24) du capteur de force magnétique (4) est relié de manière mobile au marchepied (10, 60), dans lequel le marchepied (10, 60) peut coulisser par rapport au capteur de force magnétique (4).

3. Agencement de marche coulissante selon la revendication 1 ou 2, qui comporte un appareil de commande (16, 66) et au moins un moteur (14, 64, 65), dans lequel l'appareil de commande (16, 66) est conçu pour commander l'au moins un moteur (14, 64, 65), et dans lequel l'au moins une moteur (14, 64, 65) est conçu pour déplacer le marchepied (10, 60) par rapport au corps de support (6, 56).

4. Agencement de marche coulissante selon la revendication 3, dans lequel le capteur de force magnétique (4) est conçu pour générer un signal dans le cas où la force agit sur le marchepied (10, 60) et pour le transmettre à l'appareil de commande (16, 66), dans lequel l'appareil de commande (16, 66) est dans ce cas conçu pour faire passer le marchepied (10, 60) en position sortie par commande de l'au moins un moteur (14, 64, 65).

5. Agencement de marche coulissante selon l'une quelconque des revendications précédentes, qui peut être disposé dans la région d'une porte d'un véhicule ferroviaire.

6. Agencement de marche coulissante selon l'une quelconque des revendications précédentes, dans lequel le capteur de force magnétique (4) comporte un élément de mesure (26) et deux éléments de contact (22, 24), dans lequel le capteur de force magnétique (4) est fixé par l'intermédiaire d'un premier élément de contact (22) au corps de support (6, 56) de l'agencement de marche coulissante (2, 52) et est relié par l'intermédiaire d'un second élément de contact (24) au marchepied (10, 60) de l'agencement de marche coulissante (2, 52), dans lequel l'élément de mesure (26) est relié aux deux éléments de contact (22, 24) et peut se déformer lorsque la force agissant sur le marchepied (10, 60) se produit.

7. Agencement de marche coulissante selon la revendication 6, dans lequel l'élément de mesure (26) du capteur de force magnétique (4) comporte deux barres de flexion (28, 30) disposées parallèlement l'une à l'autre et comporte en tant qu'éléments formant aimants (32, 34) un aimant permanent et un magnétomètre à effet Hall, dans lequel chaque barre de flexion (28, 30) est d'une part reliée au premier élément de contact (22) et est d'autre part reliée au second élément de contact (24), dans lequel un premier élément formant aimant (32) est relié au premier élément de contact (22) et un second élément formant aimant (24) est relié au second élément de contact (24), dans lequel, lorsque la force agissant sur le marchepied (10, 60) se produit, les éléments formant aimants (32, 34) peuvent se déplacer l'un par rapport à l'autre, et dans lequel une variation spatiale d'un champ magnétique de l'aimant permanent peut être détectée par le magnétomètre à effet Hall.
